**Europäisches Patentamt**

**European Patent Office**

**Office européen des brevets**

(19)

(11) Veröffentlichungsnummer: **0 208 136**
**B1**

(12) ## EUROPÄISCHE PATENTSCHRIFT

(45) Veröffentlichungstag der Patentschrift:
**13.09.89**

(51) Int. Cl.⁴: **F 02 B 1/02**, F 02 B 43/06,
F 02 G 5/02

(21) Anmeldenummer: **86107582.8**

(22) Anmeldetag: **04.06.86**

(54) **Verfahren zum Betrieb einer Brennkraftmaschine.**

(30) Priorität: **04.07.85 DE 3523855**

(43) Veröffentlichungstag der Anmeldung:
**14.01.87 Patentblatt 87/3**

(45) Bekanntmachung des Hinweises auf die Patenterteilung:
**13.09.89 Patentblatt 89/37**

(84) Benannte Vertragsstaaten:
**DE FR GB**

(56) Entgegenhaltungen:
**DE-A-3 413 508**
**FR-A-2 312 553**
**US-A-4 407 238**
**US-A-4 429 534**

(73) Patentinhaber: **ROBERT BOSCH GMBH, Postfach
50, D-7000 Stuttgart 1 (DE)**

(72) Erfinder: **Leonhard, Rolf, Dr. Ing., Breslauer
Strasse 29, D-7141 Schwieberdingen (DE)**

## Beschreibung

### Stand der Technik

Die Erfindung geht aus von einem Verfahren nach der Gattung des Hauptanspruchs. Die Abwärmerückgewinnung durch endotherme Kraftstoffvergasung, beispielsweise Methanol-Vergasung ist beispielsweise aus "Methanol Decomposition Bottoming Cycle for IC Engines" (SAE Technical Paper Series 790 427) bekannt. Die dort vorgeschlagene Methanol-Vergasung sieht vor, das Spaltgas der Ansaug- bzw. der Ladeluft zuzumischen. Damit kann zwar gegenüber einem Betrieb mit flüssigem Kraftstoff der Gesamtwirkungsgrad um max. 20 % gesteigert werden, die maximale Leistung bzw. Motorlast ist jedoch deutlich geringer als die mögliche Vollast des konventionellen Diesel- oder Ottomotors, da sich der Luftliefergrad entsprechend der zugeführten Gasmenge vermindert und unter Umständen Klopfen auftritt.

### Vorteile der Erfindung

Das erfindungsgemäße Verfahren mit den kennzeichnenden Merkmalen des Hauptanspruchs hat demgegenüber den Vorteil, daß die Anwendung bei hochverdichteten Brennkraftmaschinen möglich ist und daß durch die Kombination von Abwärmeausnutzung zur endothermen Methanol-Vergasung und Hochdruckeinblasung des aus Wasserstoff und Kohlenoxid bestehenden Spaltgases der Gesamtwirkungsgrad gegenüber Dieselbetrieb bis zu 30 % gesteigert werden kann. Diese Gesamtwirkungsgradsteigerung resultiert aus der 20 %-igen Heizwertsteigerung infolge der endothermen Methanol-Vergasung in Verbindung mit einer Erhöhung des thermodynamischen Wirkungsgrades des Motors infolge der Hochdruckeinblasung des Spaltgases gegen Ende der Verdichtungsphase.

Aufgrund des um 20 % höheren auf die stöchiometrische Luftmenge bezogenen Heizwertes und der Motorwirkungsgradsteigerung aufgrund der besseren Luftausnutzung ist auch eine Leistungssteigerung um ca. 30 % gegenüber Dieselbetrieb möglich. Ferner ist durch den Gasbetrieb eine Abgasentgiftung hinsichtlich Ruß, Kohlenwasserstoffen und NOx zu erwarten.

Anders als bei Betrieb mit Flüssigmethanol müssen bei der Vorvergasung keine hohen Reinheitsanforderungen an den Kraftstoff gestellt werden. Technisch nur mit hohem Aufwand zu vermeidende Beimischungen von Wasser oder anderen Alkoholen beeinflussen zwar Wirkungsgrad und Leistungsausbeute geringfügig, sind jedoch für den einwandfreien Betrieb des Motors nicht störend.

Durch die in den Unteransprüchen aufgeführten Maßnahmen sind vorteilhafte Weiterbildungen des im Hauptanspruch angegebenen Verfahrens möglich. Durch die Hochdruckvergasung des Methanols entsteht der Vorteil, daß der Spaltgasreaktor sehr kompakt ausgebildet sein kann, da bei der zur Vergasung notwendigen Verweilzeit das Reaktorvolumen proportional dem Druck abnimmt. Ferner kann der Spaltgasreaktor gleichzeitig die Funktion eines Gasspeichers haben, was im Hinblick auf instationäre Betriebszustände vorteilhaft ist.

### Zeichnung

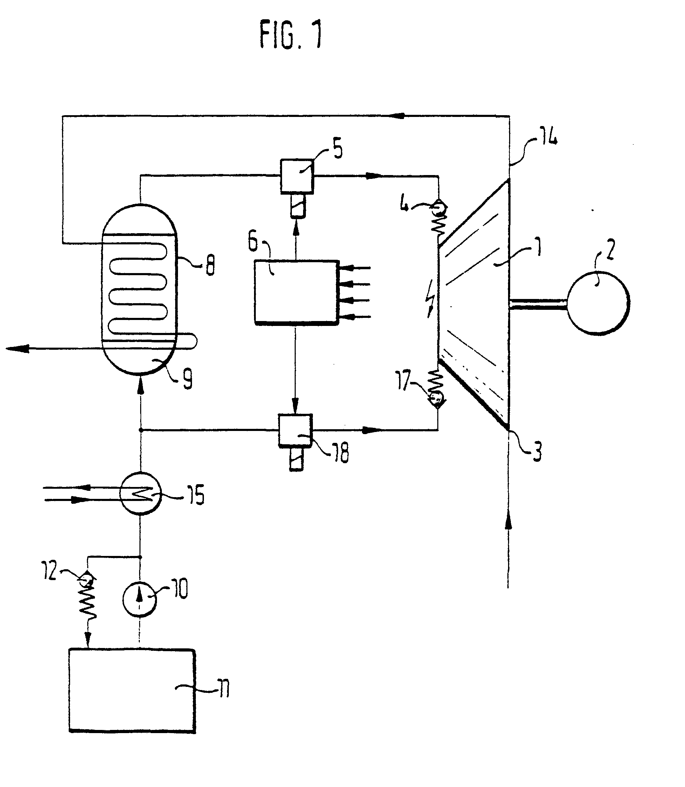

Ausführungsbeispiele der Erfindung sind in der Zeichnung dargestellt und in der nachfolgenden Beschreibung näher erläutert. Es zeigen Figur 1 bis 3 drei vereinfachte Schaltschemata einer Brennkraftmaschine und eines Spaltgasreaktors.

### Beschreibung der Ausführungsbeispiele

Einer Brennkraftmaschine 1, die einen Verbraucher 2 antreibt, wird die für die Verbrennung erforderliche Luft durch Ansaugen oder durch Aufladen bei 3 zugeführt. Ihrem Brennraum wird Spaltgas, das vorwiegend aus Wasserstoff und Kohlenmonoxid besteht und das aus Methanol erzeugt wird, durch ein Einblaseventil 4 zugeleitet. Die der Last und den übrigen Betriebsbedingungen der Brennkraftmaschine 1 angepaßte Gasmenge wird von einem Magnetventil 5 dosiert, das mit einem den Zeitpunkt und die Dauer der Einblasung steuernden Zentraleinheit 6 verbunden ist. Das Spaltgas wird unter hohem Druck, beispielsweise in einem Bereich von 80 bis 100 bar, während des Verdichtungshubes eingeblasen, wobei eine möglichst späte Einspritzung angestrebt wird.

Das Spaltgas, das bei vollständiger Durchgasung aus Wasserstoff und Kohlenmonoxid im Volumenverhältnis 2 : 1 besteht, wird bei dem zur Einblasung erforderlichen Druck in einem Vergasungsreaktor 8 erzeugt, dem ein Verdampfer 9 vorgeschaltet ist. Eine Hochdruckpumpe 10 fördert das flüssige Methanol aus einem Vorratsbehälter 11 in den Verdampfer 9 und hält zusammen mit einem Druckregelventil 12 den hohen Gasdruck im Vergasungsreaktor 8 aufrecht.

Die zur Vergasung des Methanols in Spaltgas notwendige Enthalpie wird aus dem Abgas der Brennkraftmaschine 1 gedeckt, das diese bei 14 verläßt. Der Vergasungsreaktor 8 ist vorzugsweise als Gegenstrom-Wärmetauscher, beispielsweise als Multi-Röhrenreaktor ausgebildet. Zur möglichst vollständigen Nutzung der Wärmeenergie des Abgases erfolgt die Vergasung katalytisch bei Reaktionstemperaturen von ca. 250 bis 300° C. Eine Steigerung der Abwärmerückgewinnung läßt sich zusätzlich erzielen, wenn das flüssige Methanol vor Eintritt in den Verdampfer 9 in einem Wärmetauscher 15 durch das Kühlwasser bzw. die Kühlluft der Brennkraftmaschine 1 vorgewärmt wird.

Die Brennkraftmaschine 1 kann sowohl mit Funkenzündung im Otto-Verfahren oder mit Selbstzündung im Diesel-Verfahren betrieben werden. Gegenüber bekannten Otto-Brennkraftmaschinen kann wegen der Gaseinblasung gegen Ende der Verdichtung das Verdichtungsverhältnis erhöht werden, z. B. auf $\varepsilon$ = 13 bis 15, ohne daß Klopfgefahr auftritt. Aus gleichem Grund kann das bei direkteinspritzenden Dieselmotoren übliche Verdichtungsniveau von $\varepsilon$ = 15 bis 20 beibehalten werden.

Da beim Start und beim Warmlauf der Brennkraftmaschine 1 Abwärme zum Erzeugen des Spaltgases fehlt, wird beim Ausführungsbeispiel nach Figur 1 während des Verdichtungshubes flüssiges Methanol durch eine Einspritzdüse 17 in den Brennraum der Brennkraftmaschine 1 eingespritzt. Die Einspritzmenge, der Zeitpunkt und die Dauer der Einspritzung werden von einem Magnetventil 18 gesteuert, das ebenfalls mit der Steuereinheit 6 verbunden ist und in Abhängigkeit von den Betriebsbedingungen der Brennkraftmaschine 1 gesteuert wird. Während des Warmlaufs der Brennkraftmaschine 1 wird das Verhältnis zwischen direkt eingespritztem, flüssigem Methanol und vom Vergasungsreaktor 8 erzeugtem Spaltgas dem Abwärmerückgewinn angepaßt und kontinuierlich verändert.

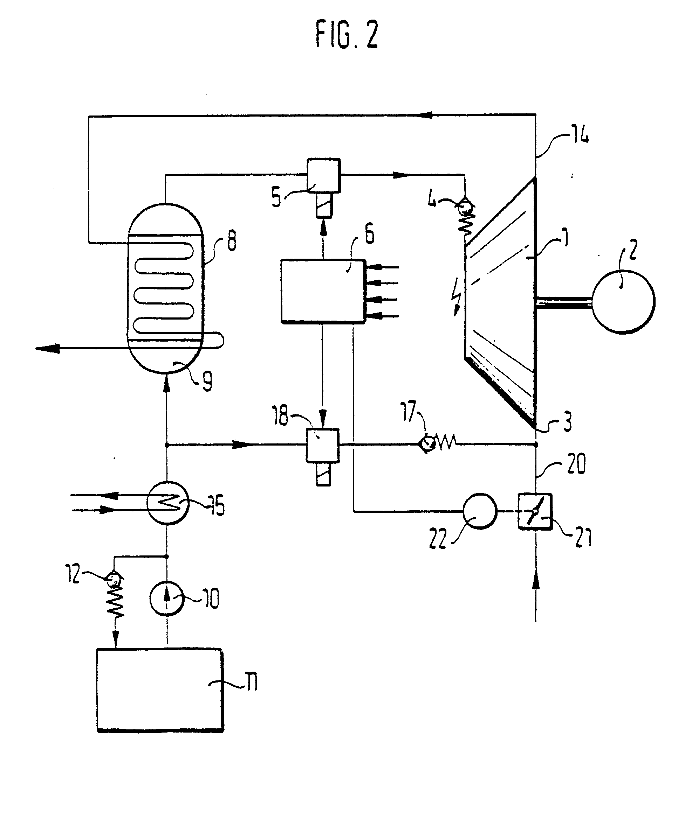

Alternativ zur Einspritzung von flüssigem Methanol in den Brennraum der Brennkraftmaschine 1 wird beim Ausführungsbeispiel nach Figur 2 das Methanol durch die Einspritzdüse 17 in das Luft-Saugrohr 20 eingespritzt. Um das Kraftstoff-Luftverhältnis weitgehend der Gemischbildung anzupassen, ist im Saugrohr 20 eine Drosselklappe 21 angeordnet, deren Stellung mittels eines Stellmotors 22 in Abhängigkeit vom Verhältnis zwischen dem in das Saugrohr 20 eingespritzen Methanol und dem Spaltgas aus dem Vergasungsreaktor 8 sowie den Betriebsbedingungen kontinuierlich verändert wird. Der Stellmotor 22 ist dazu ebenfalls mit der Steuereinheit 6 verbunden.

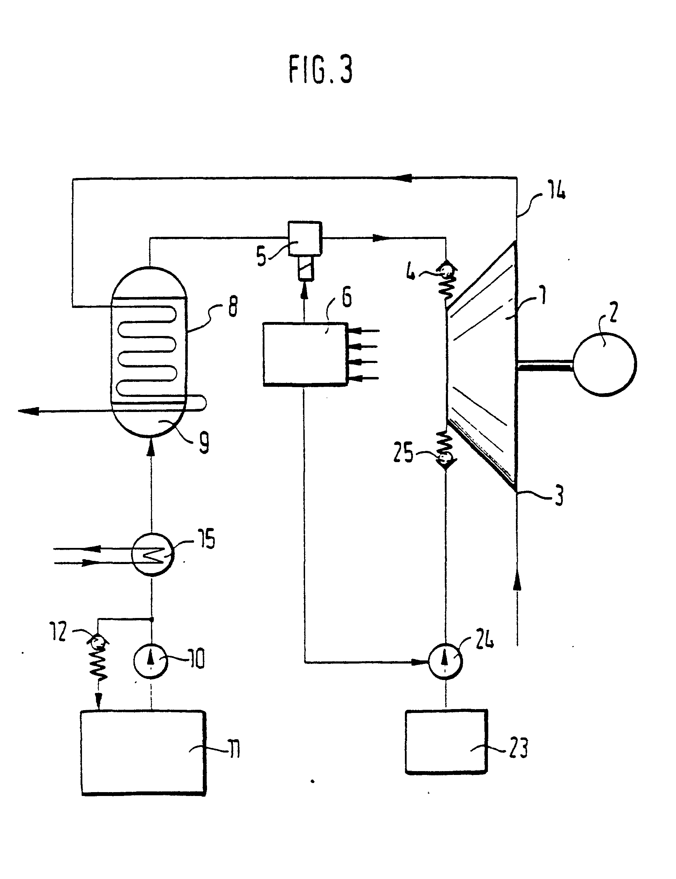

Beim Ausführungsbeispiel nach Figur 3 handelt es sich um eine selbstzündende Brennkraftmaschine 1 mit einem Verdichtungsverhältnis von $\varepsilon$ = 15 bis 20. Die Zündung des Gemisches aus Spaltgas und Luft erfolgt hier durch Hochdruckeinspritzung von zündwilligem Kraftstoff, beispielsweise Dieselkraftstoff. Der Anteil des zur Zündung verwendeten zusätzlichen Kraftstoffes beträgt im Normalbetrieb energetisch ca. 5 bis 10 % der gesamten zugeführten Kraftstoffenergie. Der zusätzliche Zündkraftstoff wird aus einem Vorratsbehälter 23 entnommen, von einer Einspritzpumpe 24 dosiert und durch eine Einspritzdüse 25 in den Brennraum der Brennkraftmaschine 1 eingespritzt. Zum Dosieren der Kraftstoffeinspritzmengen ist die Einspritzpumpe 24 mit der Steuereinheit 6 verbunden. Wenn zur vollständigen Spaltung des Methanols die Abgaswärme der Brennkraftmaschine 1 nicht ausreicht, wie z. B. beim Start oder Warmlauf, wird der Anteil des eingespritzten Zündkraftstoffs erhöht.

**Patentansprüche**

1. Verfahren zum Betrieb einer freisaugenden oder aufgeladenen Brennkraftmaschine mit einem aus Methanol erzeugten Spaltgas und Luft, bei dem das Methanol in einem Vergasungsreaktor unter Ausnutzung der Wärme des von der Brennkraftmaschine abgegebenen Abgases vergast wird, dadurch gekennzeichnet, daß das Spaltgas unter Hochdruck direkt in den Brennraum der Brennkraftmaschine (1) eingeblasen wird.

2. Verfahren nach Anspruch 1, dadurch gekennzeichnet, daß das Methanol unter Hochdruck in einem Vergasungsreaktor (8) vergast wird.

3. Verfahren nach Anspruch 1 oder 2, dadurch gekennzeichnet, daß der Vergasungsdruck dem Einblasdruck angepaßt ist.

4. Verfahren nach Anspruch 3, dadurch gekennzeichnet, daß der Einblasdruck im Bereich von 80 bis 100 bar liegt.

5. Verfahren nach einem der Ansprüche 1 bis 4, dadurch gekennzeichnet, daß das Spaltgas während des Verdichtungshubes der Brennkraftmaschine (1) in deren Brennraum eingeblasen wird.

6. Verfahren nach Anspruch 5, dadurch gekennzeichnet, daß der Zeitpunkt und die Zeitdauer der Einblasung von einem Betriebsdaten der Brennkraftmaschine (1) verarbeitenden Steuergerät (6) gesteuert wird, das ein eine Spaltgasmenge zumessendes Magnetventil (5) ansteuert.

7. Verfahren nach einem der Ansprüche 1 bis 6, dadurch gekennzeichnet, daß das Methanol vor der Vergasung in einem dem Vergasungsreaktor (8) vorgeschalteten Verdampfer (9) ebenfalls unter Hochdruck verdampft wird.

8. Verfahren nach Anspruch 7, dadurch gekennzeichnet, daß das Methanol vor dem Verdampfen in einem vom Kühlmittel der Brennkraftmaschine (1) getriebenen Wärmetauscher (15) vorgewärmt wird.

9. Verfahren nach einem der Ansprüche 1 bis 7, dadurch gekennzeichnet, daß das Spaltgas/Luft-Gemisch im Brennraum der Brennkraftmaschine 1 durch Hochdruckeinspritzung von zündwilligem Kraftstoff mit einem energetischen Energieanteil von 5 bis 10 % gezündet wird.

**Claims**

1. Method of operating a free-induction or super-charged internal-combustion engine with a cracked gas produced from methanol and air, whereby the methanol is gasified in a gasification reactor, by utilizing the heat of the waste gas discharged from the internal-combustion engine, characterized in that the cracked gas is injected at high pressure directly into the combustion chamber of the internal-combustion engine (1).

2. Method according to Claim 1, characterized in that the methanol is gasified at high pressure in a gasification reactor (8).

3. Method according to Claim 1 or 2, characterized in that the gasification pressure is adapted to the injection pressure.

4. Method according to Claim 3, characterized in that the injection pressure is in the range from 80 to 100 bar.

5. Method according to one of Claims 1 to 4, characterized in that the cracked gas is injected into the combustion chamber of the internal-combustion engine (1) during the compression stroke of the latter.

6. Method according to Claim 5, characterized in that the time and the duration of the injection are controlled by a control appliance (6) which processes operating data of the internal-combustion engine (1) and which modulates a solenoid valve (5) which apportions a quantity of cracked gas.

7. Method according to one of Claims 1 to 6, characterized in that the methanol is likewise evaporated at high pressure before the gasification in an evaporator (9) which precedes the gasification reactor (8).

8. Method according to Claim 7, characterized in that the methanol is preheated before the evaporation in a heat exchanger (15) operated by the cooling medium of the internal-combustion engine (1).

9. Method according to one of Claims 1 to 7, characterized in that the cracked gas/air mixture is ignited in the combustion chamber of the internal-combustion engine (1) by a highpressure injection of ignitable fuel having an energetic energy fraction of 5 to 10 percent.

**Revendications**

1. Méthode d'exploitation d'un moteur à combustion interne à aspiration atmosphérique ou suralimentée, avec un gaz de crakage produit à partir de méthanol et de l'air, pour laquelle le méthanol est gazéifié dans un réacteur de gazéification en exploitant la chaleur des gaz d'échappement délivrés par le moteur à combustion interne, caractérisée en ce que le gaz de crakage est injecté à haute pression directement dans la chambre de combustion du moteur à combustion interne (1).

2. Méthode selon la revendication 1, caractérisée en ce que le méthanol est gazéifié sous haute pression dans un réacteur de gazéification (8).

3. Méthode selon la revendication 1 ou 2, caractérisée en ce que la pression de gazéification est adaptée à la pression d'injection.

4. Méthode selon la revendication 3, caractérisée en ce que la pression d'injection est située dans la plage allant de 80 à 100 bars.

5. Méthode selon l'une des revendications 1 à 4, caractérisée en ce que le gaz de crakage est injecté pendant la phase de compression du moteur à combustion interne (1), dans sa chambre de combustion.

6. Méthode selon la revendication 5, caractérisée en ce que le moment et la durée de l'injection sont commandés par un appareil de commande (1) traitant les données de fonctionnement du moteur à combustion interne (1) et commandant une soupape magnétique (5) dosant la quantité de gaz de crakage.

7. Méthode selon la revendication 1, caractérisée en ce que le méthanol est vaporisé également sous haute pression avant gazéification dans un vaporiseur (9) branché en amont du réacteur de gazéification (8).

8. Méthode selon la revendication 1, caractérisée en ce que le méthanol est préchauffé avant vaporisation dans un échangeur de chaleur (15) fonctionnant avec le milieu de refroidissement du moteur à combustion interne (1).

9. Méthode selon la revendication 1, caractérisée en ce que le mélange de crakage/air est allumé dans la chambre de combustion du moteur à combustion interne (1) par injection sous haute pression d'un carburant inflammable, avec une proportion énergétique allant de 5 à 10 %.

# FIG. 1

# FIG. 2

# FIG.3